# EUROPÄISCHE PATENTSCHRIFT

(11) **EP 0 671 292 B1**
(45) Veröffentlichungstag und Bekanntmachung des Hinweises auf die Patenterteilung: **07.01.1998**
(21) Anmeldenummer: 95102226.8
(22) Anmeldetag: 17.02.1995
(51) Int. Cl.: B60N 2/36

(54) **Kraftfahrzeug-Hintersitz mit einer geteilten Rückenlehne**
Motor vehicle rear seat with a split backrest
Siège arrière de véhicule automobile à dossier en deux parties

(30) Priorität: 24.02.1994 DE 4405698
(43) Veröffentlichungstag der Anmeldung: 13.09.1995
(73) Patentinhaber: ADAM OPEL AG, 65423 Rüsselsheim (DE)
(72) Erfinder: Leuchtmann, Andrew, Dipl.-Ing., D-55545 Bad Kreuznach (DE); Gimbel, Hans Peter, Dipl.-Ing., D-65468 Trebur (DE)
(74) Vertreter: Kümpfel, Heinz, Dipl.-Ing.

(56) Entgegenhaltungen:
- EP-A- 0 474 368
- DE-A- 3 211 363

## Beschreibung

Die Erfindung betrifft einen Kraftfahrzeug-Hintersitz mit einer geteilten Rückenlehne nach dem Oberbegriff des Patentanspruches 1 (siehe zum Beispiel EP-A-0 474 368).

Derartige Kraftfahrzeug-Hintersitze werden insbesondere bei Personen- und Kombifahrzeugen angewendet, die hinter der Rückenlehne einen Laderaum aufweisen, der durch Umklappen der Rückenlehne vergrößert werden kann. Bei modernen Fahrzeugen ist zur Erhöhung des Komforts die Rückenlehne mittig oder außermittig geteilt und die Rückenlehnenteile sind einzeln entriegel- und umlegbar.

Im allgemeinen besteht aber bei diesen Rückenlehnen die Gefahr, daß bei extremer Belastung, insbesondere bei einem Heck- oder Frontalaufprall, die freien Enden der Rückenlehnenteile im Bereich der Teilungsebene dem Druck aus dem Laderaum nicht standhalten. Es kann zu Deformationen der Rückenlehnenteile (besonders im mittleren Bereich der Rückenlehne) und zur Lösung der Verriegelungen an der Seitenwand kommen. Es besteht somit ein Verletzungsrisiko für die Fahrzeuginsassen.

Um diese Gefahr zu reduzieren ist es aus der DE-C-32 11 363 bekannt, an der Teilungsebene eine zusätzliche Verriegelungvorrichtung zur lösbaren Verriegelung der beiden Rückenlehnenteile gegeneinander anzuordnen, wobei die Verriegelungsvorrichtung an der Seitenwand und die zusätzliche Verriegelungsvorrichtung zur gleichzeitigen Betätigung über jeweils ein Betätigungsgestänge verbunden sind.

Diese zusätzliche Verriegelungsvorrichtung bietet jedoch nur dann einen wirksamen Schutz, wenn beide Rückenlehnenteile miteinander und an der Seitenwand verriegelt sind. Sobald sich ein Rückenlehnenteil in umgeklappter Stellung befindet, bietet die zusätzliche Verriegelungsvorrichtung keinen Schutz mehr.

Eine weitere geteilte umklappbare Rückenlehne ist aus der EP-A-0 474 368 bekannt, bei der jedes einzelne Rückenlehnenteil in der Gebrauchsstellung einerseits über eine im Bereich des Spaltes zwischen den Rückenlehnenteilen angeordnete Scharniereinrichtung und andererseits mittels einer am vom Spalt entfernten Rand angeordneten Rasteinrichtung feststellbar ausgebildet ist. Dabei ist vorgesehen, daß sowohl die Scharniereinrichtung als auch die Rasteinrichtung durch eine manuell betätigbare Löseeinrichtung lösbar ist.

Zu diesem Zwecke ist die Löseeinrichtung einerseits über eine Wirkverbindung mit der Rasteinrichtung und andererseits über eine Wirkverbindung mit der Scharniereinrichtung verbunden. Bei Betätigung des einzigen Lösehebels können somit sowohl die Scharniereinrichtung als auch die Rasteinrichtung entriegelt werden.

Nachteilig bei dieser Ausbildung ist jedoch, daß die Wirkverbindungen nicht direkt zwischen der Scharniereinrichtung und der Rasteinrichtung angeordnet sind. Bei Ausfall einer Wirkverbindung, beispielsweise zwischen der Löseeinrichtung und der Rasteinrichtung, kann immer noch - in diesem Falle unnötigerweise - durch die andere Wirkverbindung die Scharniereinrichtung gelöst werden. Da für einen Insassen eine solche Entriegelung nicht ersichtlich ist, können bei einem darauffolgenden Unfall Verletzungsgefahren für die Insassen entstehen.

Weiterhin ist bei dieser Ausbildung nachteilig, daß die Löseeinrichtung durch Hebelverbindungen mit den einzelnen Wirkverbindungen aufwendig aufgebaut ist und viel Raum an den Rückenlehnenteilen beansprucht.

Aufgabe der vorliegenden Erfindung ist es, die Sicherheit für Insassen auf den Kraftfahrzeug-Hintersitzen der genannten Gattung zu erhöhen sowie die Verriegelung der einzelnen Rückenlehnenteile in der etwa vertikalen Gebrauchsstellung zu verbessern, ohne daß es dabei zu Einschränkungen hinsichtlich des Komforts beim Umklappen der Rückenlehnenteile kommt.

Gelöst wird diese Aufgabe durch kennzeichnende Merkmale des Patentanspruchs 1.

Der hauptsächlich durch die Erfindung erzielte Vorteil besteht darin, daß durch die gemeinsame Verriegelung an der Seitenwand und am inneren Scharnier die Stabilität des jeweiligen Rückenlehnenteils unabhängig von der Stellung des anderen Rückenlehnenteils erhöht wird. Durch die zusätzliche Verriegelung am inneren Scharnier entsteht bei Belastung des Rückenlehnenteils infolge eines Unfalls ein Widerstandsmoment um die Schwenkachse des Rückenlehnenteils, der gegen die auf das Rückenlehnenteil einwirkenden Kräfte gerichtet ist. Auf diese Weise wird das Verletzungsrisiko für Fahrzeuginsassen reduziert.

Erfindungsgemäß ist dabei vorgesehen, daß zur gemeinsamen Ver- und Entriegelung zwischen den beiden Verriegelungsvorrichtungen eines Rückenlehnenteils die Wirkverbindung derart gestaltet ist, daß bei Verriegelung bzw. Entriegelung einer Verriegelungsvorrichtung, beispielsweise der an der Seitenwand angreifenden Verriegelungsvorrichtung, die Verriegelung bzw. Entriegelung der anderen Verriegelungsvorrichtung, beispielsweise der am inneren Scharnier, auslöst. Diese Wirkverbindung kann mechanisch, zum Beispiel als ein Gestänge, oder elektrisch ausgebildet sein. Im letzteren Falle können eine oder auch beide Verriegelungsvorrichtungen mit Einrichtungen zur elektrischen Betätigung, wie zum Beispiel elektrische Stellglieder, ausgerüstet sein, so daß beim Ver- bzw. Entriegeln nur ein Auslösesignal von einer Verriegelungsvorrichtung zu der anderen übermittelt werden muß.

Besonders einfach können beide Verriegelungsvorrichtungen gemeinsam betätigt werden, wenn die Wirkverbindung als Seilzug ausgebildet ist, der einerseits an einem federbelasteten Schloßriegel des Verriegelungsschlosses der an der Seitenwand angreifenden Verriegelungsvorrichtung und andererseits an einem beweglich gelagerten Verriegelungshebel der Verriegelungsvorrichtung am inneren Scharnier lösbar befestigt ist. Dazu sind am Schloßriegel und am Verriegelungshebel an sich bekannte Aufnahmen zur lösbaren Verbindung mit den entsprechenden Seilzugenden vorgesehen. Durch seine Flexibilität eignet sich der Seilzug, der auch als Bowdenzug ausgebildet werden kann, besonders gut zur Verlegung und Befestigung in Hohlräumen des Rückenlehnenteils oder der Karosserie.

Beim Zurückschwenken des jeweiligen Rückenlehnenteils in die etwa vertikale Gebrauchsstellung verriegelt sich selbsttätig das Verriegelungsschloß und verankert somit das Rückenlehnenteil an der Seitenwand. Dabei wird die Bewegung des Schloßriegels, der durch eine am Verriegelungsschloß angeordnete Feder vorgespannt ist, aus einer verrasteten Lösestellung in die Verriegelungsstellung über den Seilzug auf den Verriegelungshebel der Verriegelungsvorrichtung am inneren Scharnier übertragen, so daß auch das innere Scharnier verriegelt wird.

Das innere Scharnier weist wie üblich zwei Beschlagteile auf, ein rückenlehnenseitiges und ein karosserieseitiges. Erfindungsgemäß ist am karosserieseitigen Beschlagteil eine Öse vorgesehen, die in der etwa vertikalen Gebrauchsstellung des Rückenlehnenteils eine Öffnung am rückenlehnenseitigen Beschlagteil durchsetzt. Da der Verriegelungshebel in vorteilhafter Weise als ein zweiarmiger Schwenkhebel mit einem zwischen den beiden Armen angeordneten Drehgelenk ausgebildet ist, kann einer der beiden Schwenkarme bei der Betätigung in die Öse eingreifen und auf diese Weise das rückenlehnenseitige Beschlagteil am karosserieseitigen Beschlagteil festhalten. Dadurch kann sich auch das Rückenlehnenteil nicht mehr um die Schwenkachse drehen.

Die Entriegelung der beiden Verriegelungsvorrichtungen erfolgt auf eine besonders einfache Art und Weise durch Betätigung eines am Rückenlehnenteil angeordneten Entriegelungsknopfes. Dabei wird der Schloßriegel gegen die Kraft der Feder in Bewegung gesetzt, bis dieser schließlich in der Lösestellung verrastet. Ähnlich wie beim Verriegelungsvorgang wird auch hier die Bewegung des Schloßriegels mittels des Seilzuges auf den Verriegelungshebel am inneren Scharnier übertragen und somit dieses zum Öffnen veranlassen.

Gemäß einer anderen vorteilhaften Ausführung der Erfindung kann der Verriegelungshebel als ein verschiebbar gelagerter und federbelasteter Bolzen ausgebildet sein, der in verriegelter Stellung eine entsprechend am Beschlagteil oder an der Karosserie angeordnete Bohrung durchsetzt. Dadurch ist das rückenlehnenseitige Beschlagteil am karosserieseitigen Beschlagteil festgehalten. Der Bolzen ist dabei durch eine Feder in Verriegelungsrichtung vorgespannt.

Die gemeinsame Ver- und Entriegelung der beiden Verriegelungsvorrichtungen erfolgt bei dieser Ausführung ähnlich wie bei der Ausführung, bei der der Verriegelungshebel als ein Schwenkhebel ausgebildet ist. Im Unterschied hierzu ist aber der die beide Verriegelungsvorrichtungen verbindende Seilzug nicht direkt, sondern über eine die Bewegungsrichtung des Seilzuges umkehrende Wippe mit dem Schloßriegel des Verriegelungsschlosses verbunden. Die Wippe ist derart drehbar am Verriegelungsschloß oder am Rückenlehnenteil angeordnet, daß eine Wippenseite direkt mit dem Schloßriegel oder mit einer Verlängerung am Schloßriegel in Kontakt steht und die andere Wippenseite lösbar mit dem Seilzug verbunden ist. Dabei sorgt die den Bolzen vorspannende Feder, deren Spannkraft sich über den mit dem Bolzen verbundenen Seilzug auf die Wippe überträgt, daß der Schloßriegel und die Wippe beim Ver- und Entriegeln ständig in Kontakt bleiben. Die Feder kann auch am Seilzug und/oder an der Wippe angeordnet sein.

Zur gemeinsamen Entriegelung wird der Entriegelungsknopf bis zur Verrastung des Schloßriegels in der Lösestellung betätigt. Dabei wird die Bewegung des Schloßriegels über die Verlängerung am Schloßriegel auf die Wippe übertragen, die wiederum über den Seilzug auf den Bolzen der Verriegelungsvorrichtung einwirkt, so daß dieser gegen die Kraft der Feder in die Lösestellung bewegt wird.

Der Verriegelungshebel, der Schloßriegel und die Wirkverbindung zwischen den beiden Verriegelungsvorrichtungen sind erfindungsgemäß am Rückenlehnenteil angeordnet. Diese Ausführung ist besonders vorteilhaft, weil das Rückenlehnenteil zusammen mit allen dazugehörigen, für den Ver- und Entriegelungsvorgang notwendigen Komponenten vormontiert und als Baueinheit in das Kraftfahrzeug eingebaut werden kann. Das Rückenlehnenteil kann auch komplett fertiggestellt in das Fahrzeug eingebaut werden.

Gemäß einer anderen, zeichnerisch nicht dargestellten Ausführung können der Verriegelungshebel, der Schloßriegel und die Wirkverbindung an der Karosserie angeordnet sein. Diese Anordnung eignet sich insbesondere für Kraftfahrzeuge, bei denen das Verriegelungsschloß für die Rückenlehne aus konstruktiven Gegebenheiten oder anderen Gründen in der Karosserie-Seitenwand und der entsprechende mit dem Verriegelungsschloß zusammenwirkende Verriegelungsbolzen am Rückenlehnenteil angeordnet sind. Bei dieser Ausführung können auch alle für den Ver- und Entriegelungsvorgang notwendigen Komponenten, wie zum Beispiel Seilzug oder Bolzen zur Verriegelung des inneren Scharniers, in der Karosserie verlegt oder vormontiert werden. Dadurch wird das Rückenlehnenteil gewichtsmäßig entlastet und es entsteht mehr Freiraum bei der Gestaltung des Rückenlehnenteils.

Die Erfindung läßt zahlreiche Ausführungsformen zu. Zur weiteren Verdeutlichung ihres Grundprinzips sind einige davon in der Zeichnung dargestellt und nachfolgend beschrieben. Die Zeichnung zeigt in
- Fig. 1: eine perspektivische Ansicht eines erfindungsgemäßen Kraftfahrzeug-Hintersitzes mit einer geteilten Rückenlehne, wobei ein Rückenlehnenteil nach vorn geklappt ist;
- Fig. 2: teilweise schematisch dargestellte Verriegelungsvorrichtungen, die mittels eines Seilzuges miteinander verbunden sind;
- Fig. 3: eine Schnittdarstellung der Verriegelungsvorrichtung entlang der Schnittführung I in Fig. 2;
- Fig. 4: eine Schnittdarstellung der Verriegelungsvorrichtung entlang der Schnittführung II in Fig. 2;
- Fig. 5: erfindungsgemäße innere Scharniere nach Fig. 1, in perspektivischer Darstellung, wobei ein Scharnier in verriegelter Stellung und das andere Scharnier in einer einem umgeklappten Rückenlehnenteil entsprechenden Stellung gezeigt ist;
- Fig. 6: einen Kraftfahrzeug-Hintersitz entsprechend der Fig. 1, jedoch mit einer alternativen Ausbildung des inneren Scharniers und der Wirkverbindung zwischen den beiden Verriegelungsvorrichtungen;
- Fig. 7: eine verschiebliche Lagerung eines Bolzen am inneren Scharnier nach Fig. 6;
- Fig. 8: eine Seitenansicht der inneren Scharniere nach Fig. 6;
- Fig. 9: eine perspektivische Ansicht der inneren Scharniere nach Fig. 8;
- Fig. 10: eine Seitenansicht einer alternativen Ausbildung der in Fig. 6 dargestellten inneren Scharniere;
- Fig. 11: eine perspektivische Ansicht der inneren Scharniere nach Fig. 10.

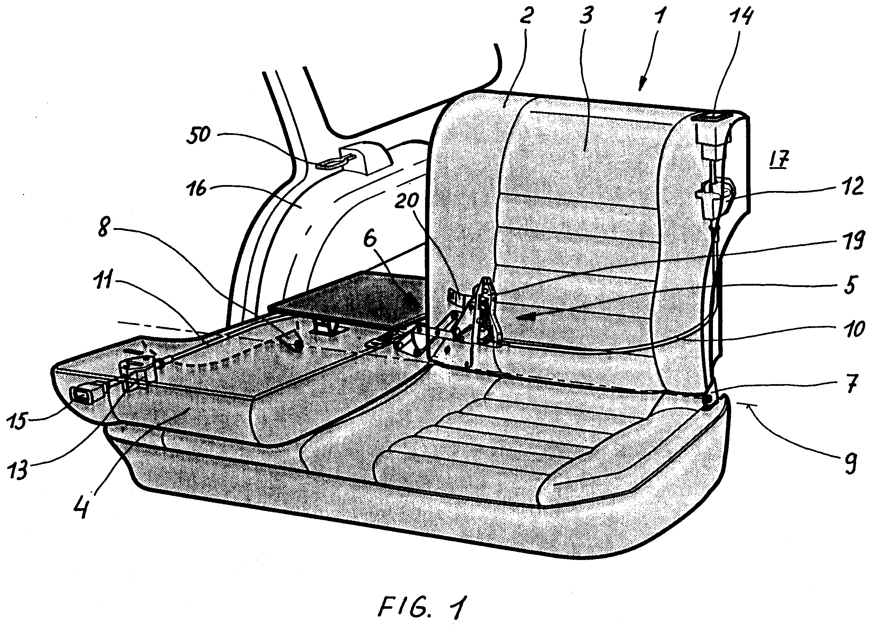

Bei dem in Fig. 1 dargestellten Kraftfahrzeug-Hintersitz 1 ist die Rückenlehne außermittig geteilt, wobei sich die einzelnen Rückenlehnenteile 3 bzw. 4 beim Umklappen um eine Schwenkachse 9 drehen. Zu diesem Zwecke weist jedes Rückenlehnenteil 3 bzw. 4 jeweils ein äußeres im Bereich der Seitenwand 16 bzw. 17 angeordnetes Scharnier 7 bzw. 8 und jeweils ein inneres im Bereich der Teilungsebene der Rückenlehne angeordnetes Scharnier 5 bzw. 6 auf. Die Scharniere 5, 6, 7, 8 sind derart ausgebildet und an der Karosserie angeordnet, daß die Schwenkachse 9 als eine durchgehende Linie horizontal und quer zur Fahrtrichtung verläuft. In Fig. 1 ist das Rückenlehnenteil 4 entriegelt und umgeklappt und das Rückenlehnenteil 3 in der etwa vertikalen Gebrauchsstellung verriegelt dargestellt, wobei die in den Rückenlehnenteilen 3, 4 integrierten oder hinter den Rückenlehnenteilen 3, 4 angeordneten Teile zur Verdeutlichung der Erfindung sichtbar gezeichnet sind.

Zur Verriegelung des Rückenlehnenteils 3 ist im Bereich der nicht dargestellten Seitenwand 17 eine Verriegelungsvorrichtung 12 vorgesehen, die mittels eines Seilzuges 10 mit einer weiteren Verriegelungsvorrichtung 19 am inneren Scharnier 5 verbunden ist. Dadurch können beide Verriegelungsvorrichtungen 12, 19 gemeinsam verriegelt bzw. entriegelt werden, wobei die Verriegelung selbsttätig durch Zurückschwenken des Rückenlehnenteils 3 in die etwa vertikale Gebrauchsstellung und die Entriegelung durch Betätigung eines an der Oberseite des Rückenlehnenteils 3 angeordneten Entriegelungsknopfes 14 erfolgt.

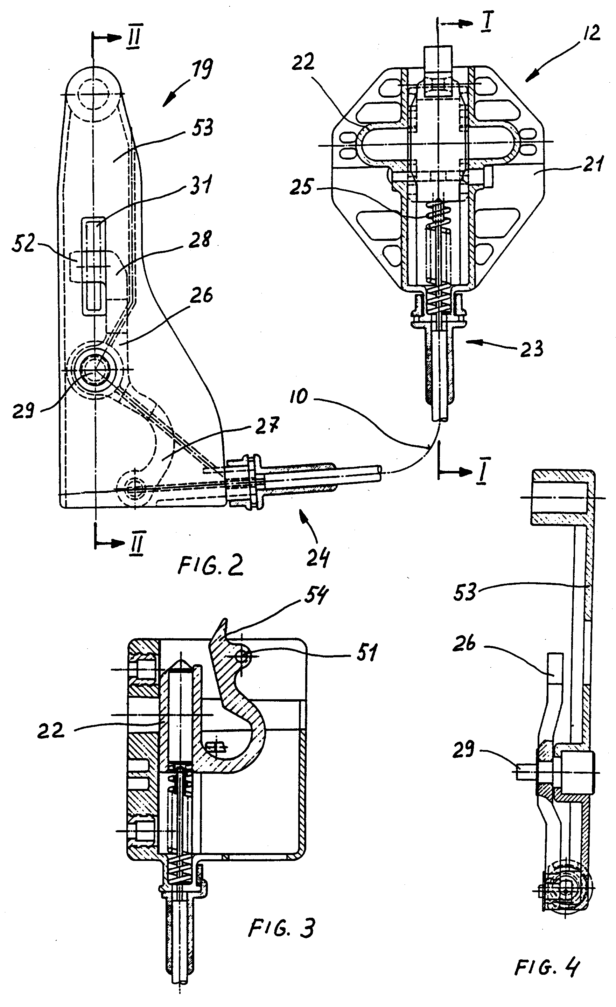

Die Verriegelung bzw. Entriegelung des Rückenlehnenteils 4 erfolgt in ähnlicher Weise wie bei dem Rückenlehnenteil 3. In Fig. 3 ist zur Verdeutlichung der selbsttätigen Verriegelung eine im Bereich der Seitenwand 16 mit der Karosserie fest verbundene Verriegelungslasche 50 dargestellt, die beim Zurückschwenken des Rückenlehnenteils 4 mit der Verriegelungsvorrichtung 13 zusammenwirkt.

Die kinematischen Zusammenhänge bei der gemeinsamen Betätigung der Verriegelungsvorrichtungen 12 und 19 bzw. 13 und 20 sind in der Fig. 2 dargestellt. Da die kinematischen Zusammenhänge für die Verriegelungsvorrichtungen 12, 19 und 13, 20 der beiden Rückenlehnenteile 3, 4 gleich sind, werden nachfolgend nur die kinematischen Zusammenhänge am Beispiel des in Fig. 1 gezeigten verriegelten Rückenlehnenteils 3 erläutert.

Wie in der Fig. 2 dargestellt, weist die an der Seitenwand 17 angreifende Verriegelungsvorrichtung 12 ein Verriegelungsschloß 21 auf, in dem ein Schloßriegel 22 verrastbar geführt ist, wobei eine am Verriegelungsschloß 21 angeordnete Feder 25 den Schloßriegel 22 in die gezeigte Verriegelungsstellung 2 vorspannt. Wie insbesondere aus der Fig. 3 ersichtlich, weist der Schloßriegel 22 einen federnden und zur Oberseite 2 hin gerichteten Rastschenkel 54 auf, der mit einer Bohrung 51 zur Verbindung mit einem nicht dargestellten Entriegelungsknopf 14 versehen ist. Die Verriegelungsvorrichtung 12 kann je nach Ausführungsform der Erfindung am Rückenlehnenteil 3 oder an der Karosserie angeordnet sein.

Zur Verbindung der beiden Verriegelungsvorrichtungen 12 und 19 ist ein Seilzug 10 vorgesehen. Der Seilzug 10 ist mit einem Ende 23 lösbar mit dem Schloßriegel 22 und mit dem anderen Ende 24 lösbar mit einem Schwenkarm 27 eines Verriegelungshebels 26 verbunden. Der andere Schwenkarm 28 ist mit einer Abkröpfung 52 versehen, die im verriegelten Zustand in eine Öse 31 eingreift. Die Öse 31 ist dabei zum besseren Verständnis in dünnen strichpunktierten Linien angedeutet. Der Verriegelungshebel 26 ist, wie in der Fig. 4 verdeutlicht, mittels eines Drehgelenkes 29 schwenkbar an einem Halter 53 gelagert, der je nach Ausführungsform der Erfindung am Rückenlehnenteil 3 oder an der Karosserie angeordnet werden kann.

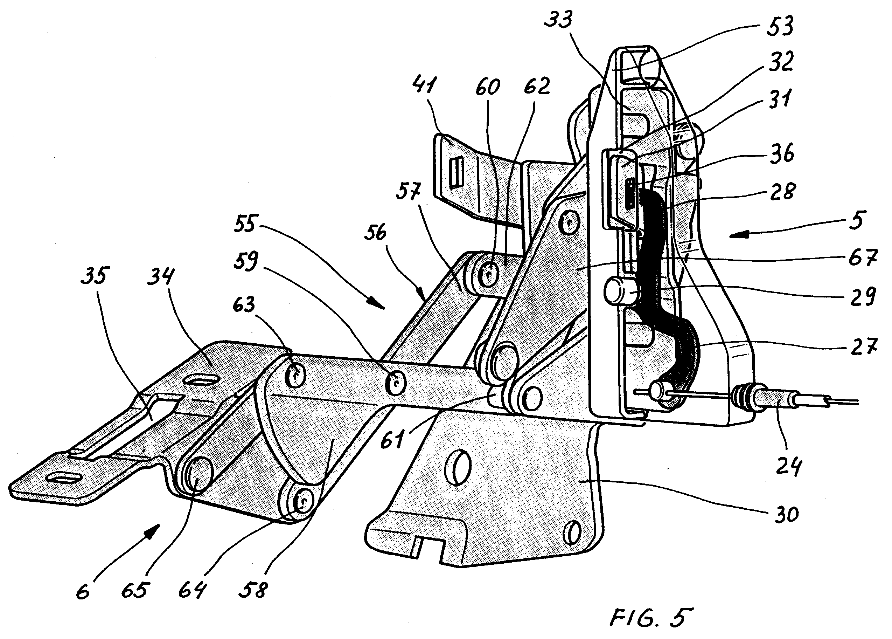

Die Fig. 5 zeigt in perspektivischer Darstellung die erfindungsgemäßen inneren Scharniere 5, 6 nach Fig. 1 ohne umliegende Teile, wobei ein Scharnier 5 in verriegelter Stellung und das andere Scharnier 6 in einer dem umgeklappten Rückenlehnenteil 4 entsprechenden Stellung gezeigt ist. Da alle Einzelteile der inneren Scharniere 5, 6 gegenüber der Teilungsebene der Rückenlehne spiegelbildlich ausgeführt sind, wird nachfolgend nur ein inneres Scharnier 5 bzw. 6 beschrieben.

So weist das innere Scharnier 6 im wesentlichen ein karosserieseitiges Beschlagteil 30, ein rückenlehnenseitiges Beschlagteil 34 sowie einen ausziehbaren Mechanismus 55 auf, wobei das karosserieseitige Beschlagteil 30 derart ausgebildet ist, daß es gleichzeitig auch als karosserieseitiges Beschlagteil für das innere Scharnier 5 verwendet ist. Der die beiden Beschlagteile 30, 34 verbindende ausziehbare Mechanismus 55 ist als scherenartiger Mehrgelenk-Mechanismus ausgebildet, bei dem das Scherenteil 56 aus zwei gleichlangen Hebelteilen 57, 58 besteht, die über ein Drehgelenk 59 miteinander verbunden sind.

Zur drehbaren Verbindung mit dem karosserieseitigen Beschlagteil 30 weist das Scherenteil 56 auf der zum Beschlagteil 30 zugewandten Seite an beiden Enden der Hebelteile 57, 58 jeweils ein Drehgelenk 60, 61 auf, wovon ein Drehgelenk 61 zur direkten Verbindung mit dem Beschlagteil und das andere Drehgelenk 60 zur Verbindung mit einem Ende eines Drehhebels 62 vorgesehen ist, wobei der Drehhebel 62 mit seinem anderen Ende über ein weiteres Drehgelenk ebenfalls mit dem Beschlagteil 30 verbunden ist.

Zur drehbaren Verbindung mit dem rückenlehnenseitigen Beschlagteil 34 weist das Scherenteil 56 auf der zum rückenlehnenseitigen Beschlagteil 34 zugewandten Seite an beiden Enden der Hebelteile 57, 58 jeweils ein Drehgelenk 63, 64 auf, wovon ein Drehgelenk 64 zur Verbindung mit dem rückenlehnenseitigen Beschlagteil 34 und das andere Drehgelenk 63 zur Verbindung mit einem Ende eines Zwischenhebels 66 vorgesehen ist, wobei der Zwischenhebel 66 mit seinem anderen Ende über ein weiteres Drehgelenk 65 ebenfalls mit dem rückenlehnenseitigen Beschlagteil 34 verbunden ist.

Durch diese Ausbildung kann das entriegelte rückenlehnenseitige Beschlagteil 34 beim Umklappen des Rückenlehnenteils 4 eine etwa kreisförmige Bahn um die Schwenkachse 9 beschreiben.

Zur Verriegelung des inneren Scharniers 6 ist am karosserieseitigen Beschlagteil 30 eine Öse 41 vorgesehen, die beim Zurückschwenken des Rückenlehnenteils 4 in die etwa vertikale Gebrauchsstellung eine Öffnung 35 am rückenlehnenseitigen Beschlagteil 34 durchsetzt. Am Beispiel des verriegelten Scharniers 5 ist deutlich zu sehen, daß in dieser Stellung der Schwenkarm 28 des Verriegelungshebels 26 in eine in der Öse 31 vorgesehene Öffnung 36 eingreift und somit das innere Scharnier 5 verriegelt. Die Verriegelung des inneren Scharniers 6 erfolgt in gleicher Weise.

Wie weiterhin aus der Fig. 5 ersichtlich, ist der Verriegelungshebel 26 mittels des Drehgelenkes 29 am rückenlehnenseitigen Beschlagteil 33 schwenkbar gelagert. Der Schwenkarm 27 des Verriegelungshebels 26 ist dabei lösbar mit dem Ende 24 des Seilzuges 10 verbunden. Bei der Verriegelung wird dieser Schwenkarm 27 mittels dieses Seilzuges 10 betätigt.

Zur weiteren Vereinfachung der Konstruktion der erfindungsgemäßen Scharniere 5, 6 können die am karosserieseitigen Beschlagteil 30 angeordneten Drehgelenke als gleichzeitig für beide ausziehbare Mechanismen 55, 67 wirkende Drehgelenke ausgebildet sein. Dies betrifft insbesondere die drehbare Lagerung des Hebelteils 58 und des Drehhebels 62 an den karosserieseitigen Scharnieren 5, 6.

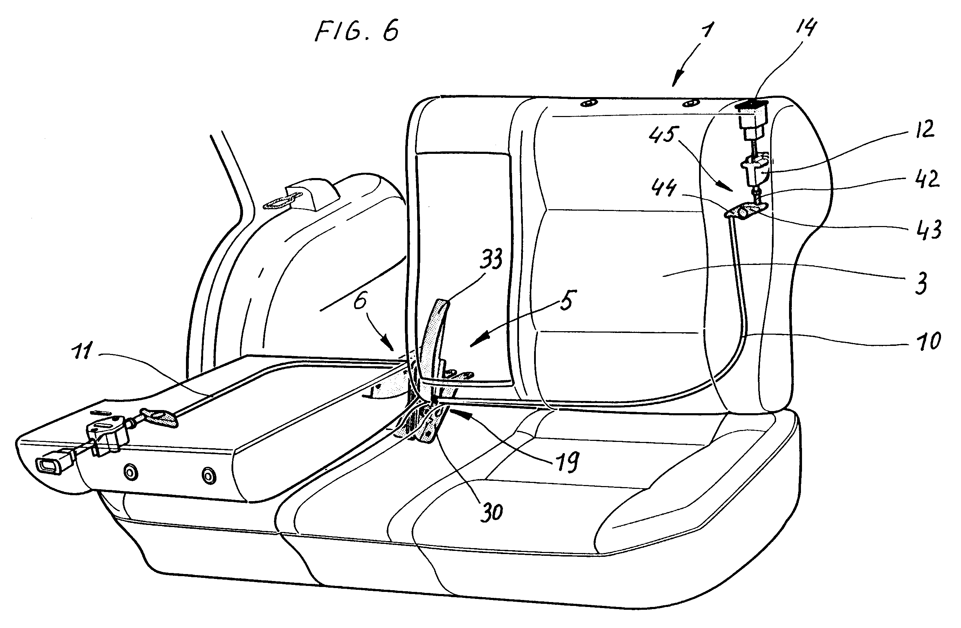

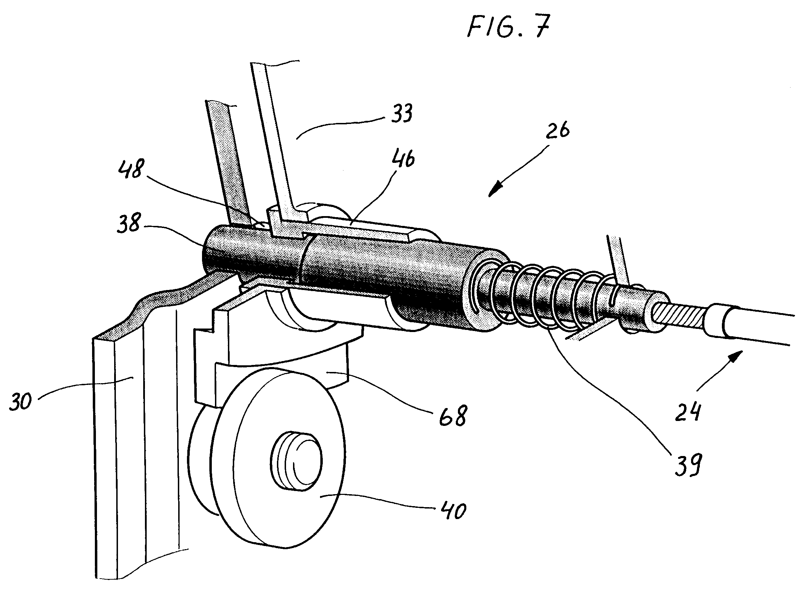

Eine alternative Ausführung der Erfindung sieht gemäß Fig. 6 und 7 vor, daß zur Ver- bzw. Entriegelung der Verriegelungsvorrichtungen 19, 20 der Verriegelungshebel 26 jeweils als ein Bolzen 38 ausgebildet ist, der an einem Ende mit dem Seilzug 10, 11 verbunden ist. Da die Verriegelung an beiden Rückenlehnenteilen 3, 4 gleich ist, wird nachfolgend nur die Ver- bzw. Entriegelung eines Rückenlehnenteils 3 erläutert.

Wie in Fig. 7 dargestellt, ist der Bolzen 38 mittels einer Führungshülse 46 am rückenlehnenseitigen Beschlagteil 33 axial verschieblich gelagert. Der Bolzen 38 wird dabei von einer Feder 39, die sich am rückenlehnenseitigen Beschlagteil oder am Rückenlehnenteil 3 abstützt, in die Verriegelungsstellung vorgespannt. In der Verriegelungsstellung, wie dargestellt, greift der Bolzen 38 in eine Bohrung 48 am karosserieseitigen Beschlagteil 30 ein und verbindet somit die beiden Beschlagteile 30, 33 miteinander. Um das rückenlehnenseitige Beschlagteil 33 quer zur Fahrtrichtung besser am karosserieseitigen Beschlagteil 30 fixieren zu können, ist am rückenlehnenseitigen Beschlagteil 33 eine Abkröpfung 68 angeformt, die in der verriegelten Stellung eine am karosserieseitigen Beschlagteil 30 drehbar gelagerte Stützrolle 40 hintergreift. Dadurch ist auch das Rückenlehnenteil 3 in der etwa vertikalen Gebrauchsstellung quer zur Fahrtrichtung zusätzlich abgestützt.

Der Seilzug 10 ist mit einem Ende 24 am Bolzen 38 und mit dem anderen Ende, wie in Fig. 6 gezeigt, an einer Wippenseite 44 der Wippe 45 befestigt, die schwenkbar am Rückenlehnenteil 3 gelagert ist. Die andere Wippenseite 43 steht in Kontakt mit einer Verlängerung 42, die mit dem Schloßriegel 22 der Verriegelungsvorrichtung 12 verbunden ist. Die Wippe 45 ist bei dieser Ausführung zur Umkehr der Bewegungsrichtung des Seilzuges 10 vorgesehen, damit eine gemeinsame Ver- bzw. Entriegelung möglich ist. Die Kraft der den Bolzen 38 vorspannenden Feder 39 wird dabei über den Seilzug 10 auf die Wippenseite 44 übertragen, so daß auch die Wippe 45 in Drehrichtung gegen den Uhrzeigersinn vorgespannt ist. Auf diese Weise ist bei der Ver- und Entriegelung des Rückenlehnenteils 3 in der Verriegelungsvorrichtung 12 ein ständiger Kontakt zwischen der Wippenseite 43 und der Verlängerung 42 gewährleistet.

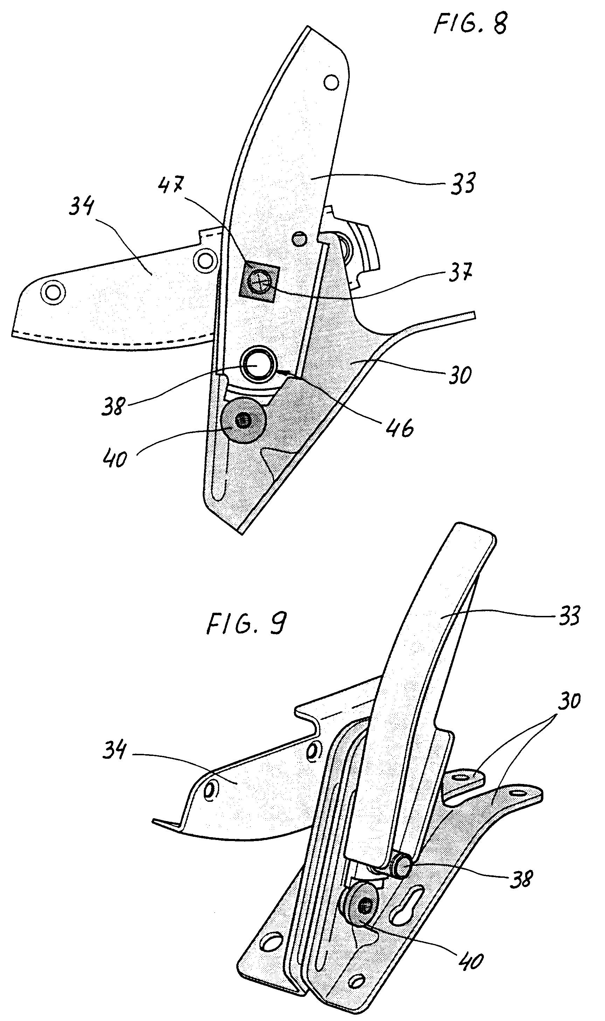

Die Fig. 8 zeigt eine Seitenansicht der inneren Scharniere 5, 6 nach Fig. 6 und die Fig. 9 eine perspektivische Ansicht dieser Scharniere 5, 6. In den Fig. 8 und 9 sind die Scharniere 5, 6 teilweise geschnitten und ohne umliegender Teile dargestellt. Die Schwenkachse 9 ist dabei durch einen Gewindebolzen 37 gebildet, der die schwenkbare Lagerung des rückenlehnenseitigen Beschlagteil 33 am karosserieseitigen Beschlagteil 30 ermöglicht. Dazu ist am karosserieseitigen Beschlagteil 30 eine Lagerbohrung zur spielfreien Aufnahme des Gewindebolzens 37 und am rückenlehnenseitigen Beschlagteil 33 eine nicht gezeigte Durchgangsbohrung sowie eine Schweißmutter 47 vorgesehen, in die der Gewindebolzen 37 eingedreht ist.

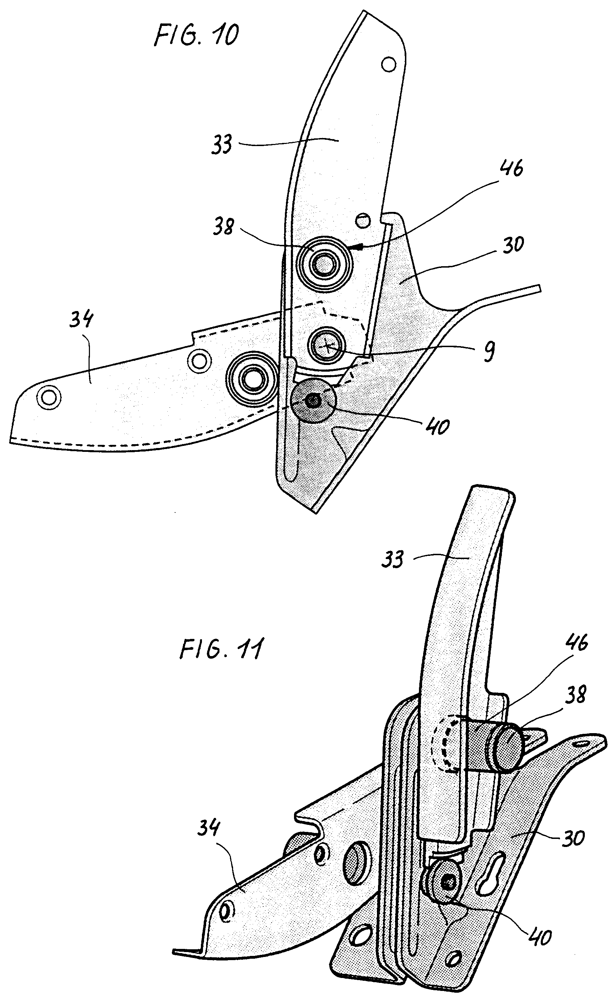

Eine alternative Ausbildung der inneren Scharniere 5, 6 ist in den Fig. 10 und 11 dargestellt, wobei die Fig. 10 eine teilweise geschnittene Seitenansicht und die Fig. 11 eine perspektivische Ansicht der inneren Scharniere 5, 6 nach Fig. 10 darstellt. Diese Ausbildung unterscheidet sich von der Ausbildung nach den Fig. 8 und 9 lediglich durch die Anordnung der Schwenkachse 9 im Bereich zwischen der Stützrolle 40 und dem Aufnahmeort des Bolzens 38, der in einer Führungshülse 46 am rückenlehnenseitigen Beschlagteil 33 längsverschieblich gelagert ist.

## Patentansprüche

1. Kraftfahrzeug-Hintersitz (1) mit einer geteilten Rückenlehne, deren einzelne Rückenlehnenteile (3; 4) zur Schwenkung um zumindest eine horizontale und quer zur Fahrtrichtung verlaufende Schwenkachse (9) über ein inneres (5; 6) im Bereich der Teilungsebene der Rückenlehne und ein äußeres im Bereich der Seitenwand des Kraftfahrzeuges angeordnetes Scharnier (7; 8) an der Karosserie angelenkt sind, wobei jedes Rückenlehnenteil (3; 4) in der etwa vertikalen Gebrauchsstellung an der Seitenwand (16, 17) mittels einer Verriegelungsvorrichtung (12; 13) verriegelbar ist und jedes innere Scharnier (5; 6) ein rückenlehnenseitiges und ein karosserieseitiges Beschlagteil sowie eine weitere Verriegelungsvorrichtung (19; 20) aufweist, die gemeinsam mit der an der Seitenwand (16; 17) angreifenden Verriegelungsvorrichtung (12; 13) durch eine Wirkverbindung ver- und entriegelbar ist, **dadurch gekennzeichnet,** daß die Wirkverbindung derart gestaltet ist, daß bei Ver- bzw. Entriegelung die eine Verriegelungsvorrichtung (12; 13 bzw. 19; 20) die Verriegelung bzw. Entriegelung der anderen Verriegelungsvorrichtung (19; 20 bzw. 12; 13) auslöst.

2. Kraftfahrzeug-Hintersitz nach Anspruch 1, **dadurch gekennzeichnet,** daß die Wirkverbindung als Seilzug (10; 11) ausgebildet ist.

3. Kraftfahrzeug-Hintersitz nach Anspruch 1, **dadurch gekennzeichnet,** daß die Wirkverbindung als eine elektrische Verbindung ausgebildet ist.

4. Kraftfahrzeug-Hintersitz nach einem der Ansprüche 1 bis 3, **dadurch gekennzeichnet,** daß die Verriegelungsvorrichtungen (19; 20) durch Betätigung eines am Rückenlehnenteil (3; 4) angeordneten Entriegelungsknopfes (14; 15) gemeinsam entriegelbar sind.

5. Kraftfahrzeug-Hintersitz nach einem der Ansprüche 1 bis 4, **dadurch gekennzeichnet,** daß die Verriegelungsvorrichtungen (19; 20) durch Zurückschwenken des Rückenlehnenteils (3; 4) in die etwa vertikale Gebrauchsstellung selbsttätig verriegelbar sind.

6. Kraftfahrzeug-Hintersitz nach einem der Ansprüche 1 bis 5, **dadurch gekennzeichnet,** daß die an der Seitenwand (16; 17) angreifende Verriegelungsvorrichtung (12, 13) ein Verriegelungsschloß (21) mit einem federbelasteten Schloßriegel (22) aufweist, an dem der Seilzug (10; 11) mit einem Ende (23) lösbar befestigt ist.

7. Kraftfahrzeug-Hintersitz nach Anspruch 6, **dadurch gekennzeichnet,** daß der Schloßriegel (22) durch Betätigung des Entriegelungsknopfes (14; 15) gegen die Kraft einer am Verriegelungsschloß (21) angeordneten Feder (25) in die Lösestellung bewegbar ist.

8. Kraftfahrzeug-Hintersitz nach einem der Ansprüche 1 bis 5, **dadurch gekennzeichnet,** daß die Verriegelungsvorrichtung (19; 20) einen beweglich gelagerten und mit einem Ende (24) des Seilzuges (10; 11) lösbar verbundenen Verriegelungshebel (26) aufweist.

9. Kraftfahrzeug-Hintersitz nach Anspruch 8, **dadurch gekennzeichnet,** daß der Verriegelungshebel (26) als ein zweiarmiger Schwenkhebel mit einem zwischen den Schwenkarmen (27, 28) angeordneten Drehgelenk (29) ausgebildet ist.

10. Kraftfahrzeug-Hintersitz nach einem der Ansprüche 1 bis 9, **dadurch gekennzeichnet,** daß am karosserieseitigen Beschlagteil (30) oder an der Karosserie eine Öse (31; 41) vorgesehen ist, die in der etwa vertikalen Gebrauchsstellung des Rückenlehnenteils (3; 4) eine Öffnung (32; 35) am rückenlehnenseitigen Beschlagteil (33; 34) durchsetzt, so daß ein Schwenkarm (28) bei Verriegelung in die Öse (31; 41) eingreifen kann.

11. Kraftfahrzeug-Hintersitz nach Anspruch 8, **dadurch gekennzeichnet,** daß der Verriegelungshebel (26) als ein verschiebbar gelagerten Bolzen (38) ausgebildet ist, der in verriegelter Stellung eine entsprechend am Beschlagteil (30) oder an der Karosserie angeordnete Bohrung (48) durchsetzt.

12. Kraftfahrzeug-Hintersitz nach Anspruch 8 oder 11, **dadurch gekennzeichnet,** daß der Verriegelungshebel (26) durch eine Feder (25) bzw. der Bolzen (38) durch eine Feder (39) in Verriegelungsrichtung vorgespannt ist.

13. Kraftfahrzeug-Hintersitz nach einem der Ansprüche 1 bis 12, **dadurch gekennzeichnet,** daß der Verriegelungshebel (26), der Schloßriegel (22) und die Wirkverbindung am Rückenlehnenteil (3; 4) angeordnet sind.

14. Kraftfahrzeug-Hintersitz nach einem der Ansprüche 1 bis 12, **dadurch gekennzeichnet,** daß der Verriegelungshebel (26), der Schloßriegel (22) und die Wirkverbindung an der Karosserie angeordnet sind.

15. Kraftfahrzeug-Hintersitz nach einem der Ansprüche 1 bis 14, **dadurch gekennzeichnet,** daß die Einzelteile der Scharniere (5, 7; 6, 8) und der Verriegelungsvorrichtungen (12, 19; 13, 20) gegenüber der Teilungsebene spiegelbildlich ausgeführt sind.

## Claims

1. Motor vehicle rear seat (1) with a split backrest of which the individual backrest portions (3; 4) are linked to the body by an inner hinge (5; 6) in the region of the dividing plane of the backrest and an outer hinge (7; 8) arranged in the region of the side panel of the motor vehicle, for pivoting about at least one horizontal pivot axis (9) extending transversely to the direction of travel, wherein each backrest portion (3; 4) can be locked in the more or less vertical working position on the side panel (16, 17) by means of a locking device (12; 13) and each inner hinge (5; 6) comprises a fitting on the backrest side and a fitting on the body side as well as an additional locking device (19; 20) which together with the locking device (12; 13) engaging the side panel (16; 17) can be locked and released by an operative connection, characterised in that the operative connection is designed so that, on locking or release, one locking device (12; 13 or 19; 20) triggers locking or release of the other locking device (19; 20 or 12; 13).

2. Motor vehicle rear seat according to claim 1, characterised in that the operative connection is designed as a cable pull (10; 11).

3. Motor vehicle rear seat according to claim 1, characterised in that the operative connection is designed as an electrical connection.

4. Motor vehicle rear seat according to any of claims 1 to 3, characterised in that the locking devices (19; 20) can be released together by actuation of a release knob (14; 15) arranged on the backrest portion (3; 4).

5. Motor vehicle rear seat according to any of claims 1 to 4, characterised in that the locking devices (19; 20) can be locked automatically by pivoting the backrest portion (3; 4) back into the more or less vertical working position.

6. Motor vehicle rear seat according to any of claims 1 to 5, characterised in that the locking device (12, 13) engaging the side panel (16; 17) comprises a lock (21) with a spring-loaded catch (22) to which the cable pull (10; 11) is releasably attached by one end (23).

7. Motor vehicle rear seat according to claim 6, characterised in that the catch (22) can be moved into the release position by actuation of the release knob (14; 15) against the force of a spring (25) arranged on the lock (21).

8. Motor vehicle rear seat according to any of claims 1 to 5, characterised in that the locking device (19; 20) comprises a movably mounted locking lever (26) releasably connected to one end (24) of the cable pull (10; 11).

9. Motor vehicle rear seat according to claim 8, characterised in that the locking lever (26) is constructed as a two-arm pivot lever with a pivot joint (29) arranged between the pivot arms (27, 28).

10. Motor vehicle rear seat according to any of claims 1 to 9, characterised in that on the fitting (30) on the body side or on the body is provided an eye (31; 41) which in the more or less vertical working position of the backrest portion (3; 4) passes through an opening (32; 35) in the fitting (33; 34) on the backrest side, so that one pivot arm (28) on locking can engage in the eye (31; 41).

11. Motor vehicle rear seat according to claim 8, characterised in that the locking lever (26) is constructed as a slidably mounted bolt (38) which in the locked position passes through a bore (48) arranged correspondingly in the fitting (30) or in the body.

12. Motor vehicle rear seat according to claim 8 or 11, characterised in that the locking lever (26) is biased by a spring (25) or the bolt (38) is biased by a spring (39) in the locking direction.

13. Motor vehicle rear seat according to any of claims 1 to 12, characterised in that the locking lever (26), the catch (22) and the operative connection are arranged on the backrest portion (3; 4).

14. Motor vehicle rear seat according to any of claims 1 to 12, characterised in that the locking lever (26), the catch (22) and the operative connection are arranged on the body.

15. Motor vehicle rear seat according to any of claims 1 to 14, characterised in that the component parts of the hinges (5, 7; 6, 8) and of the locking devices (12, 19; 13, 20) are designed in inverse symmetry relative to the dividing plane.

## Revendications

1. Siège arrière (1) de véhicule automobile à dossier en plusieurs parties, dont les différentes parties de dossier (3; 4), à des fins de pivotement autour d'au moins un axe de pivotement (9) horizontal s'étendant transversalement à la direction de déplacement du véhicule, sont articulées sur la carrosserie par l'intermédiaire d'une charnière intérieure (5; 6) dans la région du plan de séparation du dossier et d'une charnière extérieure (7; 8) disposée dans la région de la paroi latérale du véhicule, chaque partie de dossier (3; 4) pouvant être verrouillée sur la paroi latérale (16; 17) dans la position d'utilisation sensiblement verticale à l'aide d'un dispositif de verrouillage (12; 13) et chaque charnière intérieure (5; 6) comportant une ferrure de dossier et une ferrure de carrosserie ainsi qu'un dispositif de verrouillage (19; 20) supplémentaire qui peut être verrouillé et déverrouillé en même temps que le dispositif de verrouillage (12; 13) agissant sur la paroi latérale (16; 17) à l'aide d'une liaison active, caractérisé par le fait que la liaison active est agencée de telle sorte que, lors du verrouillage ou du déverrouillage, l'un des dispositifs de verrouillage (12; 13 ou 19; 20) déclenche le verrouillage ou le déverrouillage de l'autre dispositif de verrouillage (12; 13 ou 19; 20).

2. Siège arrière de véhicule automobile selon la revendication 1, caractérisé par le fait que la liaison active est réalisée sous forme de commande à câble sous gaine (10; 11).

3. Siège arrière de véhicule automobile selon la revendication 1, caractérisé par le fait que la liaison active est réalisée sous forme de liaison électrique.

4. Siège arrière de véhicule automobile selon une des revendications 1 à 3, caractérisé par le fait que les dispositifs de verrouillage (19, 20) peuvent être déverrouillés ensemble par actionnement d'un bouton de déverrouillage (14; 15) disposé sur la partie de dossier (3; 4).

5. Siège arrière de véhicule automobile selon une des revendications 1 à 4, caractérisé par le fait que les dispositifs de verrouillage (19; 20) peuvent être verrouillés de manière automatique par pivotement de la partie de dossier (3; 4) dans sa position d'utilisation sensiblement verticale.

6. Siège arrière de véhicule automobile selon une des revendications 1 à 5, caractérisé par le fait que le dispositif de verrouillage (12; 13) qui agit sur la paroi latérale (16; 17) présente une serrure (21) avec un pêne (22) sollicité par ressort auquel le câble sous gaine (10; 11) est fixé de manière démontable par une extrémité (23).

7. Siège arrière de véhicule automobile selon la revendication 6, caractérisé par le fait que le pêne (22) peut être amené dans la position de déverrouillage par actionnement du bouton de déverrouillage (14; 15) à l'encontre de la force d'un ressort (25) prévu sur la serrure (21).

8. Siège arrière de véhicule automobile selon une des revendications 1 à 5, caractérisé par le fait que le dispositif de verrouillage (19;20) comporte un levier de verrouillage (26) mobile qui est lié de manière démontable à une extrémité (24) du câble sous gaine (10; 11).

9. Siège arrière de véhicule automobile selon la revendication 8, caractérisé par le fait que le levier de verrouillage (26) est agencé sous la forme d'un levier oscillant à deux bras avec une articulation (29) disposée entre les bras oscillants (27; 28).

10. Siège arrière de véhicule automobile selon une des revendications 1 à 9, caractérisé par le fait qu'il est prévu sur la ferrure de carrosserie (30) ou sur la carrosserie un anneau (31; 41) qui, dans la position d'utilisation sensiblement verticale de la partie de dossier (3; 4), pénètre dans une ouverture (32; 35) dans la ferrure de dossier (33; 34) de telle sorte qu'un bras (28) puisse s'engager dans l'anneau (31; 41) lors du verrouillage.

11. Siège arrière de véhicule automobile selon la revendication 8, caractérisé par le fait que le levier de verrouillage (26) est agencé sous forme d'une tige (38) montée coulissante qui, dans la position verrouillée, s'engage dans un trou (48) correspondant prévu sur la ferrure (30) ou sur la carrosserie.

12. Siège arrière de véhicule automobile selon la revendication 8 ou la revendication 11, caractérisé par le fait que le levier de verrouillage (26) est précontraint dans la direction de verrouillage par un ressort (25) ou que la tige (38) est précontrainte dans la direction de verrouillage par un ressort (39).

13. Siège arrière de véhicule automobile selon une des revendications 1 à 12, caractérisé par le fait que le levier de verrouillage (26), le pêne (22) et la liaison active sont disposés sur la partie de dossier (3, 4).

14. Siège arrière de véhicule automobile selon une des revendications 1 à 12, caractérisé par le fait que le levier de verrouillage (26), le pêne (22) et la liaison active sont disposés sur la carrosserie.

15. Siège arrière de véhicule automobile selon une des revendications 1 à 14, caractérisé par le fait que les éléments des charnières (5, 7; 6, 8) et les dispositifs de verrouillage (12, 19; 13, 20) présentent une symétrie de miroir par rapport au plan de séparation.
